# EUROPEAN PATENT APPLICATION

(11) **EP 4 116 634 A1**
(43) Date of publication of application: **11.01.2023**
(21) Application number: 20891467.1
(22) Date of filing: 05.03.2020
(51) Int. Cl.: F24F 11/43, F24F 11/48, F24F 11/54, F24F 11/61, F24F 13/22, F24F 1/0059

(54) **AIR CONDITIONER**

(71) Applicant: Hitachi-Johnson Controls Air Conditioning, Inc., Tokyo 105-0022 (JP)
(72) Inventor: OHATA, Ryosuke, Tokyo 105-0022 (JP); YAMADA, Toru, Tokyo 105-0022 (JP); ARAI, Yuki, Tokyo 105-0022 (JP)
(74) Representative: MERH-IP Matias Erny Reichl Hoffmann Patentanwälte PartG mbB
(86) International application number: PCT/JP2020/009348
(87) International publication number: WO 2021/176640

(57) **Abstract**

An air-conditioner has multiple indoor units different from each other in time required for a freezing step, and a control device has the function of controlling a refrigerant cycle sequentially through a compressor, an outdoor heat exchanger, an expansion valve, and indoor heat exchangers to execute the operation of washing surfaces of the indoor heat exchangers. The control device executes the washing operation in the order of indoor heat exchanger freezing, indoor heat exchanger defrosting, and indoor heat exchanger drying. The indoor heat exchanger freezing is performed for the indoor units in descending order of the time required for the freezing step, and for the indoor units of which time required for the freezing step is short, the freezing step is started at delayed timing such that the end of the freezing step for these indoor units is coincident with that for the indoor units of which time required for the freezing step is long.

## Description

### TECHNICAL FIELD

The present invention relates to an air-conditioner.

### BACKGROUND ART

As the technique of bringing an indoor heat exchanger of an air-conditioner into a clean state, Patent Literature 1 discloses, for example, the following "air-conditioner." The air-conditioner includes a refrigerant circuit in which refrigerant circulates in a refrigeration cycle sequentially through a compressor, a condenser, a first expansion valve, and an evaporator and a control section configured to control at least the compressor and the first expansion valve. One of the condenser or the evaporator is an outdoor heat exchanger arranged at an outdoor unit, and the other one of the condenser or the evaporator is an indoor heat exchanger arranged at an indoor unit. The single indoor unit and the single outdoor unit are provided. The indoor heat exchanger has an upper front heat exchanger and a back heat exchanger connected to each other in an inverted V-shape as viewed in a longitudinal section and a lower front heat exchanger arranged below the upper front heat exchanger. The first expansion valve is connected to the lower front heat exchanger through a refrigerant pipe, and is connected to the upper front heat exchanger through the lower front heat exchanger. The control section causes the indoor heat exchanger to function as the evaporator, thereby freezing the indoor heat exchanger. After the indoor heat exchanger has been frozen, the control section executes defrosting of the indoor heat exchanger and drying of the indoor heat exchanger in this order. In defrosting of the indoor heat exchanger, the compressor is in a stop state, and the degree of opening of the first expansion valve is increased. At at least some of the steps of drying the indoor heat exchanger, the compressor is driven, and the indoor heat exchanger functions as the condenser.

### CITATION LIST

### PATENT LITERATURE

PATENT LITERATURE 1: Japanese Patent No. 6387197

### SUMMARY OF INVENTION

### PROBLEMS TO BE SOLVED BY INVENTION

The technique described in Patent Literature 1 is basically configured such that the single indoor unit and the single outdoor unit are provided. For example, Patent Literature 1 fails to describe a multi-type air-conditioner for a building. The multi-type air-conditioner for the building is an air-conditioner capable of separately operating multiple indoor units with different capacities by a single outdoor unit. Moreover, the indoor units different from each other not only in the capacity but also in a machine type are connected to one or more units. No study has been conducted on the technique of keeping indoor heat exchangers of the multiple indoor units in a clean state in such an air-conditioner.

The present invention has been made for solving the above-described problems, and is intended to provide an air-conditioner having multiple indoor units different from each other in a machine type or a capacity and an outdoor unit and configured so that indoor heat exchangers of the multiple indoor units can be properly kept in a clean state.

### SOLUTIONS TO PROBLEMS

In order to solve the problem described above, an air-conditioner according to the present invention is a single-system air-conditioner which includes: multiple indoor units different from each other in a machine type or an indoor heat exchanger capacity; and an outdoor unit, in which the air-conditioner has the multiple indoor units different from each other in freezing time as duration of a step of freezing indoor heat exchangers provided in the multiple indoor units, and a control device of the air-conditioner performs operation such that when the freezing step is performed, time periods for performing the freezing step for the multiple indoor units at least partially overlap with each other according to the freezing time. Other aspects of the present invention will be described in later-described embodiments.

### EFFECTS OF INVENTION

According to the present invention, in the air-conditioner having the multiple indoor units different from each other in the machine type or the capacity and the outdoor unit, the indoor heat exchangers of the multiple indoor units can be properly kept in the clean state.

### BRIEF DESCRIPTION OF DRAWINGS

Fig. 1 is a diagram showing an entire configuration of an air-conditioner according to a first embodiment.
Fig. 2 is a diagram showing a refrigeration cycle configuration of the air-conditioner according to the first embodiment.
Fig. 3 is a diagram showing a control system configuration of the air-conditioner according to the first embodiment.
Fig. 4 is a diagram showing functional blocks of the air-conditioner.
Fig. 5 is a table showing main indoor unit characteristics in freezing.
Fig. 6 is a flowchart of washing processing executed by a control section of the air-conditioner.
Fig. 7 is a flowchart showing processing for freezing an indoor heat exchanger.
Fig. 8 is a map showing a relationship between the relative humidity of indoor air and freezing time.
Fig. 9 is a map showing a relationship between an outdoor temperature and the rotation speed of a compressor.
Fig. 10 is a graph for describing one example of a temporal change in the temperature of the indoor heat exchanger.
Fig. 11 is a time chart C1 showing the washing processing for multiple indoor units.
Fig. 12 is a time chart showing main equipment states of an outdoor unit and the indoor units.
Fig. 13 is a flowchart showing another type of processing for freezing the indoor heat exchanger.
Fig. 14 is a time chart C2 showing the washing processing for the multiple indoor units.
Fig. 15 is a time chart C3 showing the washing processing for the multiple indoor units.
Fig. 16 is a time chart C4 showing the washing processing for the multiple indoor units.
Fig. 17 is a time chart C5 showing the washing processing for the multiple indoor units.
Fig. 18 is a time chart C6 showing the washing processing for the multiple indoor units.
Fig. 19 is a diagram showing a refrigeration cycle configuration of an air-conditioner according to a second embodiment.
Fig. 20 is a time chart C7 showing washing processing for multiple indoor units.
Fig. 21 is a time chart C8 showing the washing processing for the multiple indoor units.

### DESCRIPTION OF EMBODIMENTS

### <<First Embodiment>>

### <Configuration of Air-Conditioner>

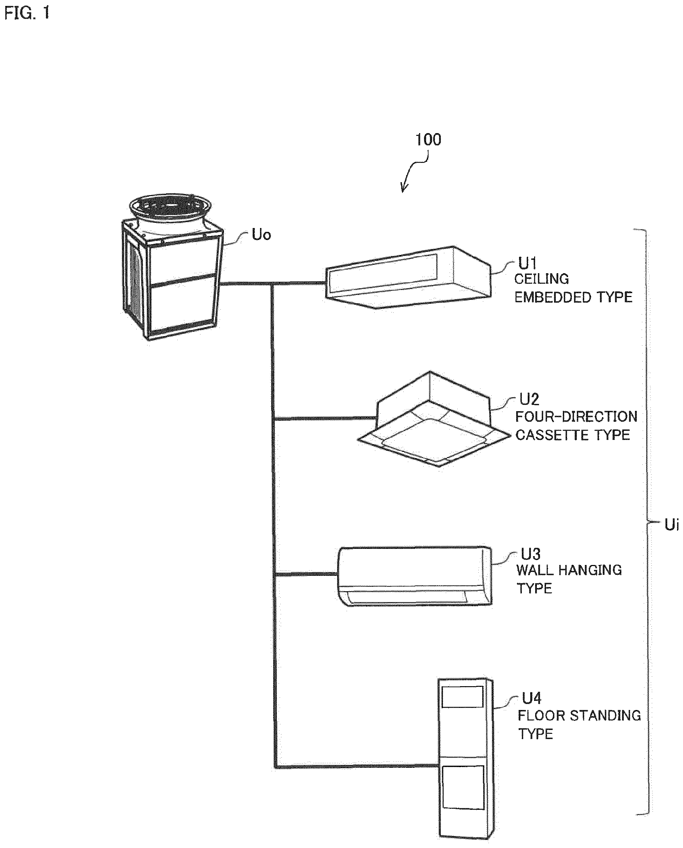

Fig. 1 is a diagram showing an entire configuration of an air-conditioner 100 according to a first embodiment. The air-conditioner 100 is equipment configured to perform air-conditioning such as air-cooling operation or air-heating operation. The air-conditioner 100 is, for example, a single-system multi-type air conditioner configured such that a single outdoor unit Uo and four indoor units U1, U2, U3, U4 (referred to as an indoor unit(s) Ui as a collective term) are connected to each other in a predetermined manner through pipes. For example, as the indoor units Ui, the indoor unit U1 is of a ceiling embedded type, the indoor unit U2 is of a four-direction cassette type, the indoor unit U3 is of a wall hanging type, and the indoor unit U4 is of a floor standing type. The multiple indoor units different from each other in a machine type or a capacity are mixed. In Fig. 1, the different types of indoor units are connected to each other, but may include multiple units of the same type.

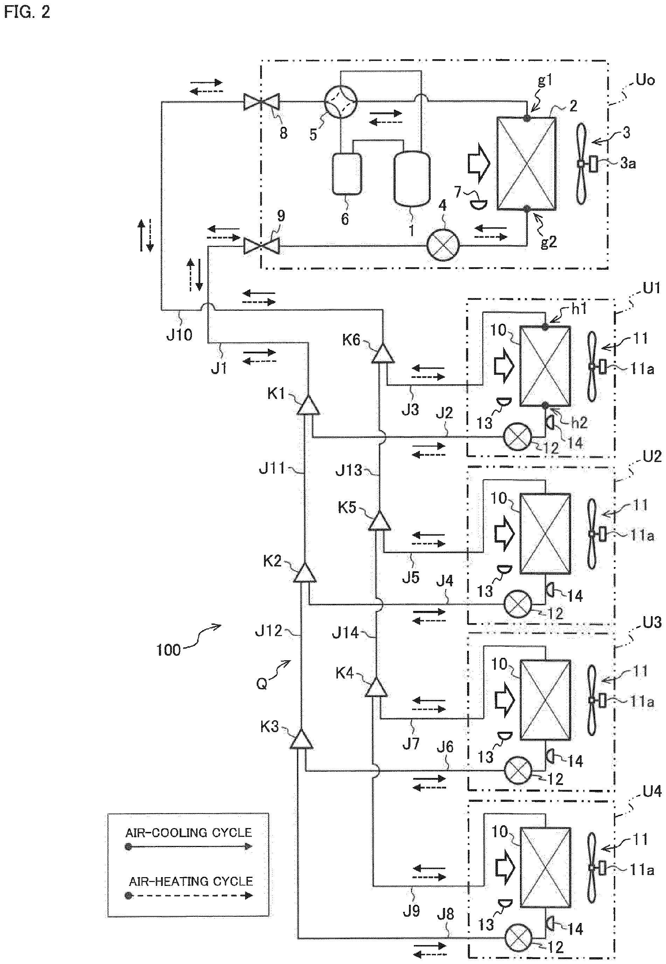

Fig. 2 is a diagram showing a refrigeration cycle configuration of the air-conditioner according to the first embodiment. Note that in a refrigerant circuit Q in Fig. 2, the flow of refrigerant in an air-cooling cycle (a refrigeration cycle in the air-cooling operation) is indicated by solid arrows, and the flow of refrigerant in an air-heating cycle (a refrigeration cycle in the air-heating operation) is indicated by dashed arrows. Moreover, in Fig. 2, the flow of air in the vicinity of an outdoor heat exchanger 2 and four indoor heat exchangers 10 is indicated by white arrows.

The air-conditioner 100 includes, as equipment provided in the outdoor unit Uo, a compressor 1, the outdoor heat exchanger 2, an outdoor fan 3, an outdoor expansion valve 4, a four-way valve 5, an accumulator 6, an outdoor temperature sensor 7, and gate valves 8, 9.

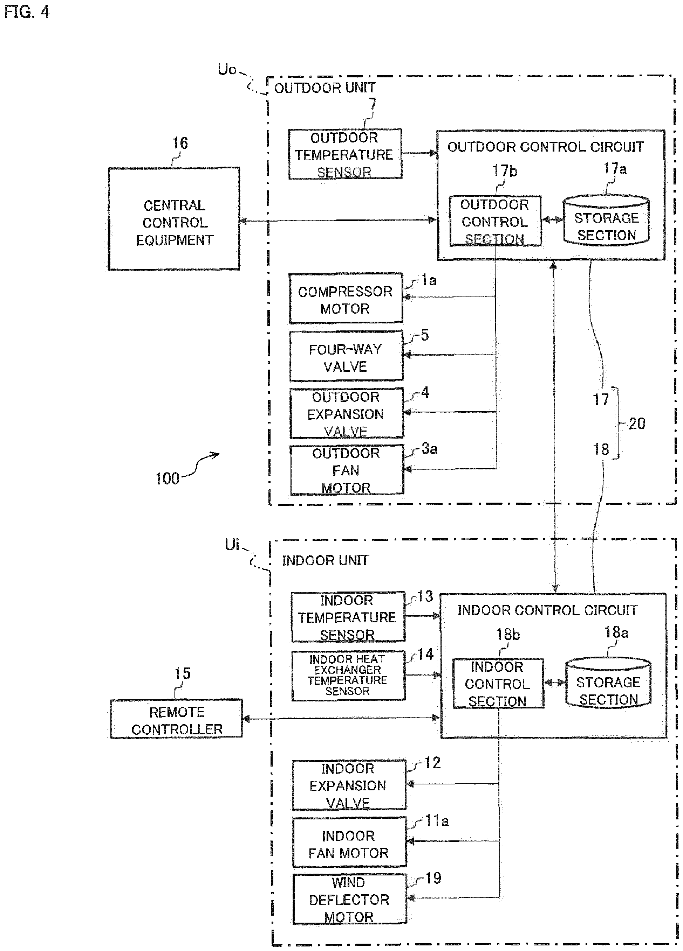

The compressor 1 is equipment configured to compress low-temperature low-pressure gas refrigerant to discharge high-temperature high-pressure gas refrigerant, and includes a compressor motor 1a (see Fig. 4) as a drive source. For example, a scroll compressor or a rotary compressor is used as such a compressor 1.

The outdoor heat exchanger 2 is a heat exchanger configured to exchange heat between refrigerant flowing in a heat transfer pipe (not shown) of the outdoor heat exchanger 2 and external air sent from the outdoor fan 3. One end g1 of the outdoor heat exchanger 2 is, by switching of the four-way valve 5, connected to a suction side or a discharge side of the compressor 1, and the other end g2 is connected to a liquid-side pipe J1.

The outdoor fan 3 is a fan configured to send external air to the outdoor heat exchanger 2. The outdoor fan 3 includes an outdoor fan motor 3a as a drive source, and is placed in the vicinity of the outdoor heat exchanger 2.

The outdoor expansion valve 4 is an electronic expansion valve configured to adjust the flow rate of refrigerant flowing in the outdoor heat exchanger 2 and depressurize refrigerant when the outdoor heat exchanger 2 functions as an evaporator. The outdoor expansion valve 4 is provided at the liquid-side pipe J1.

The four-way valve 5 is a valve configured to switch a refrigerant flow path in a predetermined manner according to an operation mode in air-conditioning. The accumulator 6 is a shell-shaped member configured to separate refrigerant flowing in through the four-way valve 5 into gas and liquid. After having been separated into the gas and the liquid by the accumulator 6, the gaseous refrigerant is guided to the suction side of the compressor 1.

The outdoor temperature sensor 7 is a sensor configured to detect an outdoor temperature, and is placed at a predetermined location (in an example of Fig. 2, an air suction side of the outdoor heat exchanger 2) in the outdoor unit Uo. Note that although not shown in Fig. 2, each sensor configured to detect one or more of the discharge pressure, discharge temperature, suction pressure, and suction temperature of the compressor may be provided as necessary.

The gate valves 8, 9 are valves opened after installation of the air-conditioner 100 such that refrigerant sealed in the outdoor unit Uo flows across the entirety of the refrigerant circuit Q. One gate valve 8 is connected to a gas-side pipe J10, and the other gate valve 9 is connected to the liquid-side pipe J1.

The air-conditioner 100 includes, as equipment provided in the indoor unit U1, the indoor heat exchangers 10, indoor fans 11, indoor expansion valves 12, indoor temperature sensors 13, and indoor heat exchanger temperature sensors 14. Note that the indoor unit U1 may include a humidity sensor (not shown).

The indoor heat exchanger 10 is a heat exchanger configured to exchange heat between refrigerant flowing in a heat transfer pipe (not shown) of the indoor heat exchanger 10 and indoor air (air in an air-conditioning room) sent from the indoor fan 11. One end h1 of the indoor heat exchanger 10 is connected to a gas-side pipe J3, and the other end h2 is connected to a liquid-side pipe J2.

The indoor fan 11 is a fan configured to send indoor air to the indoor heat exchanger 10. The indoor fan 11 has an indoor fan motor 11a as a drive source, and is placed in the vicinity of the indoor heat exchanger 10.

The indoor expansion valve 12 is an electronic expansion valve configured to adjust the flow rate of refrigerant flowing in the indoor heat exchanger 10 and depressurize refrigerant when the indoor heat exchanger 10 functions as an evaporator. The indoor expansion valve 12 is provided at the liquid-side pipe J2.

The indoor temperature sensor 13 is a sensor configured to detect the temperature of indoor air. In the example of Fig. 2, the indoor temperature sensor 13 is placed on an air suction side of the indoor heat exchanger 10.

The indoor heat exchanger temperature sensor 14 is a sensor configured to detect the temperature of the indoor heat exchanger 10. In the example of Fig. 2, the indoor heat exchanger temperature sensor 14 is placed in the vicinity of the other end h2 of the indoor heat exchanger 10 at the liquid-side pipe J2. Note that the position of the indoor heat exchanger temperature sensor 14 is not limited to that in the example of Fig. 2. For example, the indoor heat exchanger temperature sensor 14 may be placed in the vicinity of one end h1 of the indoor heat exchanger 10 at the gas-side pipe J3. Alternatively, the indoor heat exchanger temperature sensor 14 may be directly placed at the indoor heat exchanger 10.

Note that the remaining three indoor units U2, U3, U4 have configurations similar to that of the indoor unit U1, and therefore, description thereof will be omitted.

Liquid-side connection portions K1, K2, K3 are portions at which a refrigerant flow is branched during the air-cooling cycle and refrigerant flows are joined together during the air-heating cycle. For example, during the air-cooling cycle, refrigerant flowing in the liquid-side pipe J1 is distributed to the four indoor heat exchangers 10 sequentially through the liquid-side connection portions K1, K2, K3.

Gas-side connection portions K4, K5, K6 are portions at which refrigerant flows are joined together during the air-cooling cycle and a refrigerant flow is branched during the air-heating cycle. For example, during the air-cooling cycle, refrigerant flows from the four indoor heat exchangers 10 are joined together sequentially through the gas-side connection portions K4, K5, K6.

According to the operation mode in air-conditioning, refrigerant circulates in a well-known refrigeration cycle (the air-cooling cycle or the air-heating cycle shown in Fig. 2) in the refrigerant circuit Q. For example, in the air-cooling operation, refrigerant circulates sequentially through the compressor 1, the outdoor heat exchanger 2 (a condenser), the outdoor expansion valve 4, the indoor expansion valves 12, and the indoor heat exchangers 10 (the evaporators). On the other hand, in the air-heating operation, refrigerant circulates sequentially through the compressor 1, the indoor heat exchangers 10 (condensers), the indoor expansion valves 12, the outdoor expansion valve 4, and the outdoor heat exchanger 2 (the evaporator).

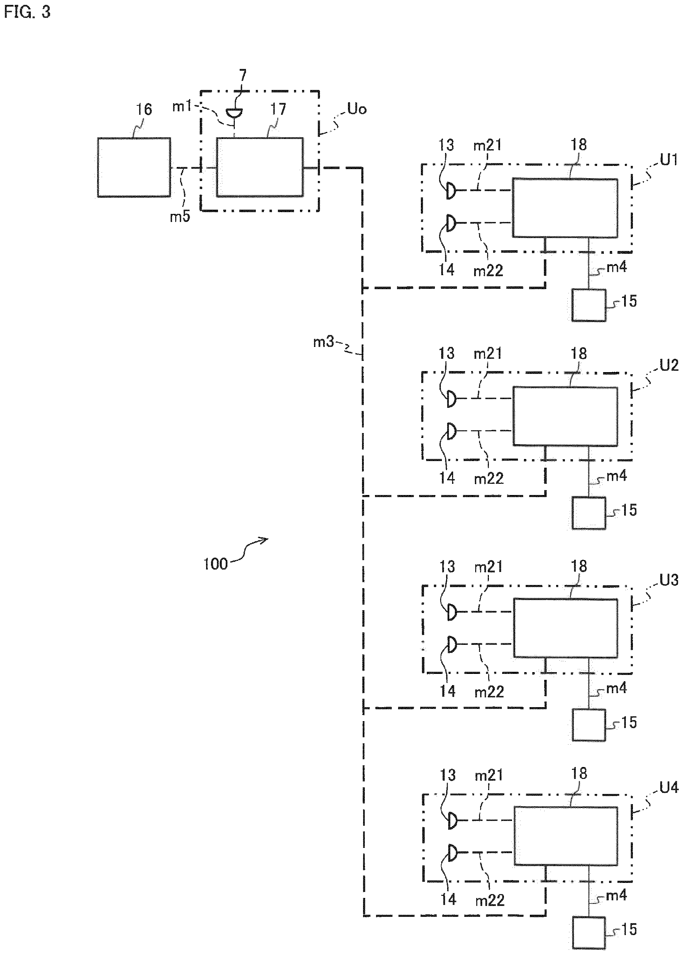

Fig. 3 is a diagram showing a control system configuration of the air-conditioner according to the first embodiment. As shown in Fig. 3, the air-conditioner 100 includes remote controllers 15 and central control equipment 16 in addition to the above-described configuration. Moreover, the outdoor unit Uo includes an outdoor control circuit 17, and the indoor units U1, U2, U3, U4 each include indoor control circuits 18.

Although not shown in the figure, each of the outdoor control circuit 17 and the indoor control circuits 18 includes electronic circuits such as a central processing unit (CPU), a read only memory (ROM), a random access memory (RAM), and various interfaces. The CPU executes various types of processing in such a manner that programs stored in the ROM are read and loaded into the RAM.

As shown in Fig. 3, the outdoor control circuit 17 is connected to the outdoor temperature sensor 7 through a line m1. Based on a detection value of each sensor including the outdoor temperature sensor 7, the outdoor control circuit 17 controls each type of equipment (performs arithmetic processing for obtaining a control command value).

The outdoor control circuit 17 is connected to the indoor control circuits 18 through a communication line m3. The indoor control circuit 18 is connected to the indoor temperature sensor 13 through a line m21, and is connected to the indoor heat exchanger temperature sensor 14 through a line m22. A detection value of each of these sensors is transmitted to the outdoor control circuit 17 from the indoor control circuits 18 through the communication line m3. The indoor control circuit 18 controls the indoor fan motor 11a (see Fig. 2) and the indoor expansion valve 12 based on the control command value calculated by the outdoor control circuit 17.

The four remote controllers 15 shown in Fig. 3 are, in one-to-one correspondence, connected to the indoor units U1, U2, U3, U4 through lines m4. For example, the remote controller 15 connected to the indoor unit U1 through the line m4 is for providing a predetermined control command to the indoor control circuit 18 of the indoor unit U1 by user operation. Examples of the above-described control command include operation/stop of the air-conditioner 100, switching of the operation mode, a change in a set temperature, a set air volume, and a set air direction, and the start of later-described freezing processing. Note that the same also applies to the other indoor units U2, U3, U4. Note that the indoor unit Ui and the remote controller 15 are connected to each other through the line, but may perform infrared communication. Alternatively, multiple indoor units may be connected to a single remote controller 15.

The central control equipment 16 is a device configured to control, e.g., indications on the four remote controllers 15, and is connected to the outdoor control circuit 17 through a communication line m5. Note that a user (a manager) operates the central control equipment 16 in a predetermined manner so that, e.g., the indications on the four remote controllers 15 can be changed.

Fig. 4 is a diagram showing functional blocks of the air-conditioner. Note that Fig. 4 shows the indoor unit Ui. That is, one of the four indoor units U1, U2, U3, U4 is shown as an example, and the remaining three units are not shown in the figure.

As shown in Fig. 4, the outdoor control circuit 17 includes a storage section 17a and an outdoor control section 17b. The storage section 17a stores, e.g., a detection value of each sensor in addition to predetermined programs. The outdoor control section 17b controls, based on the data stored in the storage section 17a, the compressor motor 1a, the four-way valve 5, the outdoor expansion valve 4, the outdoor fan motor 3a and the like.

On the other hand, the indoor control circuit 18 includes a storage section 18a and an indoor control section 18b. The storage section 18a stores, e.g., data input through the remote controller 15 in addition to predetermined programs and a detection value of each sensor. The indoor control section 18b controls, based on the data stored in the storage section 18a, not only the indoor expansion valve 12 and the indoor fan motor 11a but also a wind deflector motor 19 in a predetermined manner. Note that the wind deflector motor 19 is a motor configured to adjust the angle of a wind deflector (not shown) to adjust the direction of air blown into a room (the air-conditioning room). Hereinafter, the indoor control circuits 18 and the outdoor control circuit 17 will be collectively referred to as a "control unit 20" (a control device).

Next, a series of processing for washing the indoor heat exchanger 10 (see Fig. 2) will be described. In many cases, a filter (not shown) for collecting dust is provided on the air suction side of the indoor heat exchanger 10. However, there is a probability that fine dust passes through the filter and adheres to the indoor heat exchanger 10. For this reason, the indoor heat exchanger 10 is preferably washed on a regular basis. Thus, in the first embodiment, after the indoor heat exchanger 10 has been frozen (frost has been formed on the indoor heat exchanger 10), ice or frost on the indoor heat exchanger 10 is melted to wash the indoor heat exchanger 10. Such a series of processing is called "washing processing" for the indoor heat exchanger 10.

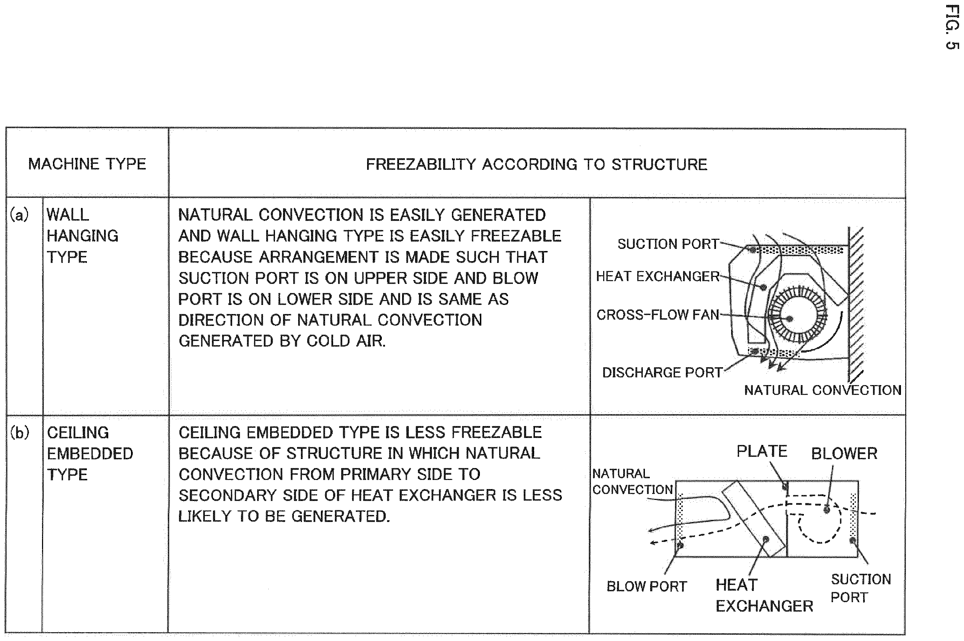

Fig. 5 is a table showing main indoor unit characteristics in freezing. The air-conditioner of the present embodiment is an air-conditioner including one or more outdoor units Uo, one or more indoor units Ui, and one or more remote controllers 15. Different forms of indoor units Ui, such as the ceiling embedded type, the four-direction cassette type, the wall hanging type, and the floor standing type, are connected to each other. The likelihood of adherence of moisture to the indoor heat exchanger 10 varies according to a structure difference among the indoor units, and time required for a freezing step is set shorter for a machine type that moisture easily adheres to the indoor heat exchanger 10. Moisture more easily adheres to the indoor heat exchanger 10 as the relative humidity of indoor air increases, and for this reason, the freezing time is set shorter as the relative humidity of indoor air increases. Fig. 5 shows freezability according to a main indoor unit structure.
(a) Wall Hanging Type: a natural convection is easily generated and the wall hanging type is easily freezable because arrangement is made such that a suction port is on an upper side and a blow port is on a lower side and is the same as the direction of natural convection generated by cold air.
(b) Ceiling Embedded Type: the ceiling embedded type is less freezable because of a structure in which a natural convection from a primary side to a secondary side of the heat exchanger is less likely to be generated.

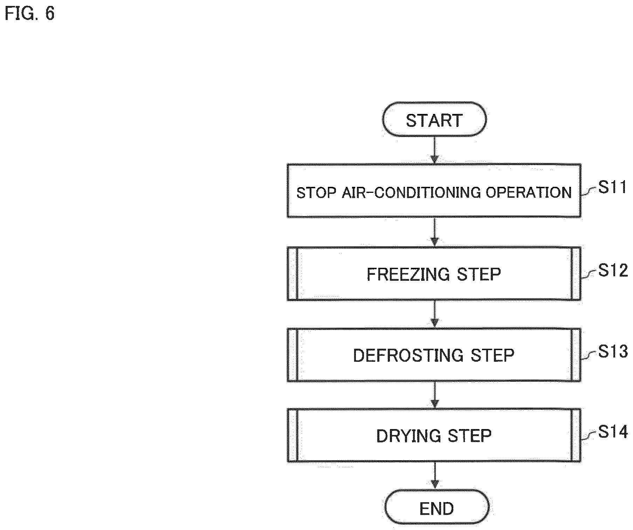

Fig. 6 is a flowchart of the washing processing executed by the control unit 20 of the air-conditioner 100 (see Figs. 2, 3, and 4 as necessary). Note that it is assumed that predetermined air-conditioning operation (the air-cooling operation, the air-heating operation and the like) is performed until "START" of Fig. 6.

Moreover, it is assumed that the condition for starting the washing processing for the indoor heat exchanger 10 is satisfied at "START." The "condition for starting the washing processing" is, for example, a condition where a cumulative value of air-conditioning operation execution time since the end of previous washing processing reaches a predetermined value. Note that a time period for performing the washing processing can be set by user operation of the remote controller 15.

At a step S11 (during preparation for the washing processing), the control unit 20 stops the air-conditioning operation for predetermined time (e.g., several minutes). The above-described predetermined time is time for stabilizing the refrigeration cycle, and is set in advance.

For example, when the indoor heat exchanger 10 is frozen (a step S12) after the air-heating operation performed until "START" has been interrupted, the control unit 20 controls the four-way valve 5 such that refrigerant flows in a direction opposite to that in the air-heating operation. Thus, in the present embodiment, the air-conditioning operation is stopped for the predetermined time (the step S11) in advance of the step (the step S12) of freezing the indoor heat exchanger 10. In this case, the control unit 20 may freeze the indoor heat exchanger 10 after a lapse of predetermined time since the air-conditioning operation is stopped.

Note that in a case where the indoor heat exchanger 10 is frozen after the air-cooling operation has been interrupted, the processing of the step S1 may be omitted. This is because the flow direction of refrigerant during the air-cooling operation (START) and the flow direction of refrigerant during freezing (the step S12) of the indoor heat exchanger 10 are the same as each other.

Next, at the step S12 (the freezing step), the control unit 20 freezes the indoor heat exchanger 10. That is, the control unit 20 causes the indoor heat exchanger 10 to function as the evaporator such that moisture contained in air taken into the indoor unit Ui forms frost on a surface of the indoor heat exchanger 10 to freeze the indoor heat exchanger 10.

At a step S13 (a defrosting step), the control unit 20 defrosts the indoor heat exchanger 10. For example, the control unit 20 causes the indoor heat exchanger 10 to function as the condenser, thereby melting ice on the surface of the indoor heat exchanger 10 to defrost the indoor heat exchanger 10. Accordingly, dust adhering to the indoor heat exchanger 10 is washed away.

At a step S14 (a drying step), the control unit 20 dries the indoor heat exchanger 10. For example, the control unit 20 dries, by drive of the indoor fan 11, water on the surface of the indoor heat exchanger 10. In this manner, the indoor heat exchanger 10 can be brought into a clean state. Note that the indoor fan 11 may be in a stop state and the indoor heat exchanger 10 may be dried by a natural convection of air. This can suppress cold air from flowing into the air-conditioning room. After the processing of the step S104 has been performed, the control unit 20 ends a series of processing (END).

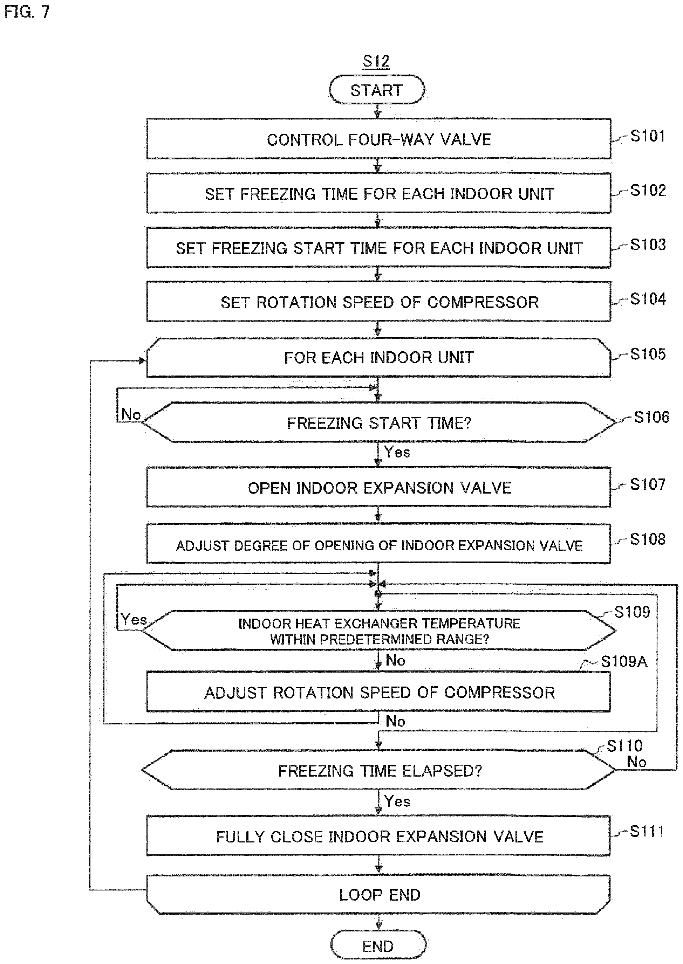

Fig. 7 is a flowchart showing the processing (the step S12 of Fig. 6) for freezing the indoor heat exchanger 10 (see Figs. 2, 3, and 4 as necessary). At a step S101, the control unit 20 controls the four-way valve 5. That is, the control unit 20 controls the four-way valve 5 such that the outdoor heat exchanger 2 functions as the condenser and the indoor heat exchangers 10 function as the evaporators. Note that in a case where the air-cooling operation is performed right before the "washing processing" (a series of processing shown in Fig. 6), the control device maintains the state of the four-way valve 5 at the step S101.

At a step S102, the control unit 20 sets the freezing time for each indoor unit Ui. As described with reference to Fig. 5, the freezing time for the indoor unit Ui varies according to the machine type, capacity or the like of the indoor unit Ui. Thus, the freezing time for each indoor unit is set based on the machine type and the capacity set in advance. Moreover, the freezing time also varies according to, e.g., the relative humidity of indoor air. Specifically, the control unit 20 sets the freezing time based on the relative humidity of indoor air (in the air-conditioning room). Note that the "freezing time" is time for which predetermined control (steps S106 to S111) for freezing the indoor heat exchanger 10 is continued.

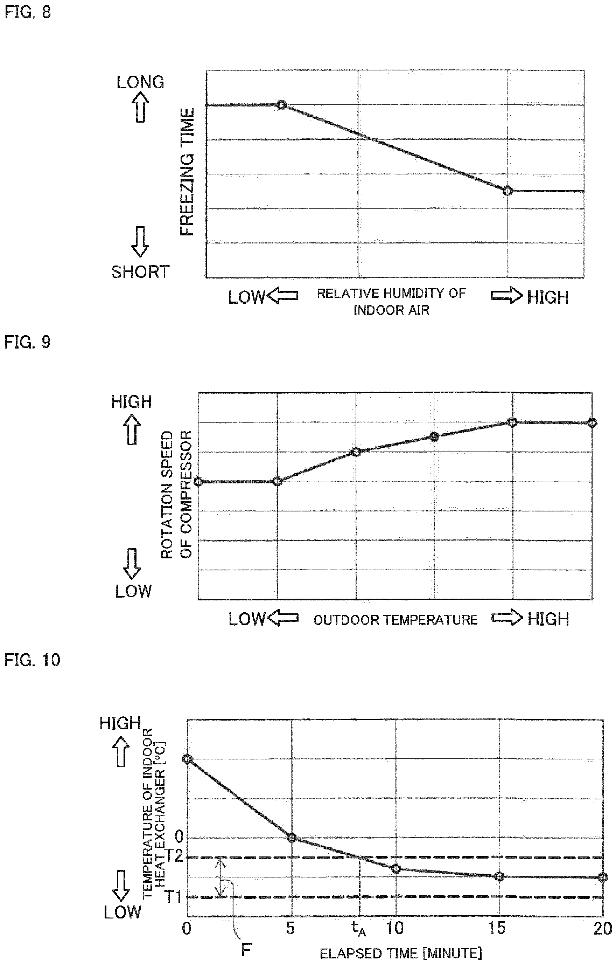

Fig. 8 is a map showing a relationship between the relative humidity of indoor air and the freezing time. The horizontal axis of Fig. 8 is the relative humidity of indoor air, and is detected by the humidity sensor (not shown). The vertical axis of Fig. 8 is the freezing time set according to the relative humidity of indoor air. As shown in Fig. 8, the control unit 20 shortens the freezing time for freezing the indoor heat exchanger 10 as the relative humidity of indoor air increases. This is because the amount of moisture contained in a predetermined volume of indoor air increases and moisture more easily adheres to the indoor heat exchanger 10 as the relative humidity of indoor air increases. The freezing time is set as described above so that a moderate amount of moisture required for washing the indoor heat exchanger 10 can adhere to the indoor heat exchanger 10 and can be frozen.

Note that a predetermined mathematical expression may be used instead of the map (a data table) shown in Fig. 8. Alternatively, the control unit 20 may set the freezing time based on the absolute humidity of indoor air instead of the relative humidity of indoor air. That is, the control unit 20 may shorten the freezing time as the absolute humidity of indoor air increases.

Next, at a step S103 of Fig. 7, the control unit 20 sets the start time of freezing of each indoor unit Ui. In freezing of the indoor heat exchangers 10, the control unit 20 executes such freezing for the indoor units in descending order of the time (the freezing time) required for the freezing step, and for the indoor units whose time required for the freezing step is short, starts the freezing step at delayed timing such that the end of the freezing step for these indoor units is coincident with that for the indoor units requiring a long freezing step.

Next, at a step S104 of Fig. 7, the control unit 20 sets the rotation speed of the compressor 1. An initial rotation speed may be set according to the capacity of the indoor unit. Depending on the machine type, the rotation speed is set according to an external air temperature in some cases.

Fig. 9 is a map showing a relationship between the outdoor temperature and the rotation speed of the compressor 1. When the indoor heat exchanger 10 is frozen, the control unit 20 increases the rotation speed of the compressor motor 1a as the outdoor temperature increases, as shown in Fig. 9. This is because for taking heat from indoor air in the indoor heat exchanger 10, heat release in the outdoor heat exchanger 2 needs to be sufficiently performed.

For example, in a case where the outdoor temperature is relatively high, the control unit 20 increases the rotation speed of the compressor motor 1a to increase the temperature/pressure of refrigerant discharged from the compressor 1. Accordingly, heat exchange in the outdoor heat exchanger 2 is properly performed, and therefore, freezing of the indoor heat exchanger 10 is also properly performed. Note that a predetermined mathematical expression may be used instead of the map (a data table) shown in Fig. 9.

Next, the control unit 20 executes the steps S105 to Sill of Fig. 7 for each indoor unit Ui. At the step S106 of Fig. 7, the control unit 20 determines whether or not the freezing start time has come. In a case where the freezing start time has come (the step S106, Yes), the indoor expansion valve 12 is slightly opened (the step S107). On the other hand, the control unit 20 determines whether or not the freezing start time has come, and in a case where the freezing start time does not come yet (the step S106, No), the control unit 20 returns to the step S106.

At the step S108 of Fig. 7, the control unit 20 adjusts the degree of opening of the indoor expansion valve 12. Note that at the step S108, the degree of opening of the indoor expansion valve 12 is slightly increased. Accordingly, lower-temperature lower-pressure refrigerant than that in the normal air-cooling operation flows into the indoor heat exchanger 10 through the indoor expansion valve 12. Thus, water adhering to the indoor heat exchanger 10 is easily freezable, and the amount of power consumption required for freezing the indoor heat exchanger 10 can be reduced. Then, the control unit 20 proceeds to the step S109 and the step S110, and performs the processing in parallel.

At the step S109, the control unit 20 determines whether or not the temperature of the indoor heat exchanger 10 is within a predetermined range. The "predetermined range" described above is a range in which moisture contained in air taken into the indoor unit Ui can be frozen on the indoor heat exchanger 10, and is set in advance.

In a case where the temperature of the indoor heat exchanger 10 is outside the predetermined range at the step S109 (the step S109, No), the rotation speed of the compressor 1 is adjusted (the step S109A), and thereafter, the processing of the control unit 20 returns to the output point (before a branching point of the step S109 and the step S110) of the step S108. For example, in a case where the temperature of the indoor heat exchanger 10 is higher than the predetermined range, the control unit 20 increases the rotation speed of the compressor 1. As described above, the control unit 20 adjusts, when freezing the indoor heat exchanger 10, the rotation speed of the compressor 1 such that the temperature of the indoor heat exchanger 10 falls within the predetermined range. In a case where the temperature of the indoor heat exchanger 10 is within the predetermined range at the step S109 (the step S109, Yes), the processing of the control unit 20 returns to the output point of the step S108.

Note that although not shown in Fig. 7, the control unit 20 may bring, when freezing the indoor heat exchanger 10 (i.e., until the predetermined freezing time is elapsed), the indoor fan 11 into the stop state, or may drive the indoor fan 11 at a predetermined rotation speed. This is because freezing of the indoor heat exchanger 10 progresses in any case.

Fig. 10 is a graph for describing one example of a temporal change in the temperature of the indoor heat exchanger 10. The horizontal axis of Fig. 10 is time elapsed after the start of freezing of the indoor heat exchanger 10 in Fig. 7 (the step S106, Yes). The vertical axis of Fig. 10 is the temperature (the detection value of the indoor heat exchanger temperature sensor 14: see Fig. 4) of the indoor heat exchanger 10. Note that a predetermined range F where the temperature is lower than 0°C is a temperature range as a reference for determination at the step S109 (see Fig. 7), and is set in advance as described above.

As shown in Fig. 10, as the "time elapsed" after the predetermined control for freezing the indoor heat exchanger 10 has been started increases, the temperature of the indoor heat exchanger 10 gradually decreases. After a lapse of time tA, the temperature of the indoor heat exchanger 10 falls within the predetermined range F. With this configuration, the indoor heat exchanger 10 can be frozen while reliability of the indoor unit Ui is ensured (an excessive decrease in the temperature of the indoor heat exchanger 10 is suppressed).

Note that freezing of the indoor heat exchanger 10 progresses after a lapse of the time tA, and therefore, the thickness of ice on the indoor heat exchanger 10 increases over time. Accordingly, a sufficient amount of water required for washing the indoor heat exchanger 10 can be frozen on the indoor heat exchanger 10.

At the step S110 of Fig. 7, the control unit 20 determines whether or not the freezing time set at the step S102 has elapsed. In a case where the predetermined freezing time does not elapse yet after the start of freezing of the indoor heat exchanger 10 (the step S110, No), the processing of the control unit 20 returns to the output point of the step S108.

On the other hand, in a case where the predetermined freezing time has elapsed after the start of freezing of the indoor heat exchanger 10 (the step S109, Yes), the control unit 20 fully closes the indoor expansion valve 12 (the step S111), and ends a series of processing for freezing the indoor heat exchanger 10 (END).

### <Time Chart C1>

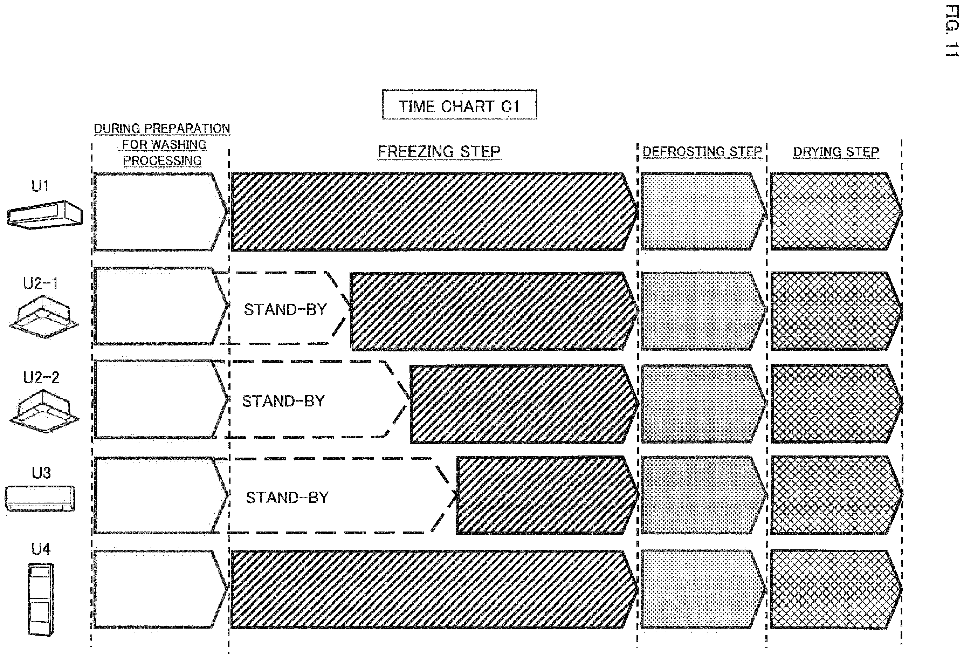

Fig. 11 is a time chart C1 showing the washing processing for the multiple indoor units. Figs. 6 and 7 will be referred as necessary. Fig. 11 shows an example of five indoor units. The indoor unit U1 is of the ceiling embedded type, indoor units U2-1, U2-2 are of the four-direction cassette type, the indoor unit U3 is of the wall hanging type, and the indoor unit U4 is of the floor standing type. The control unit 20 sets the freezing start time for each indoor unit according to the end of the freezing step. At the step of freezing the indoor heat exchanger 10, freezing is executed for the indoor units in descending order of the time required for the freezing step (e.g., starting from the indoor unit U1 and the indoor unit U4), and for the indoor units (e.g., the indoor units U2-1, U2-2, U3) of which time required for the freezing step is short, the freezing step is started at delayed timing such that the end of the freezing step for these indoor units is coincident with that for the indoor units requiring a long freezing step. Note that the indoor units U2-1, U2-2 are different from each other in the time required for the freezing step because of a difference in the capacity of the indoor heat exchanger 10 or a difference in the relative humidity of indoor air.

According to an example shown in Fig. 11, the freezing step can be properly performed for each indoor unit Ui according to the machine type and the capacity or indoor environment, and the washing processing can be performed for the indoor units Ui in a single system all together. Thus, the amount of power consumption required for the washing processing for each indoor unit Ui can be reduced.

The control unit 20 may change the rotation speed of the indoor fan 11 configured to send indoor air to the indoor heat exchanger 10 such that the time required for the freezing step becomes uniform. As the preset time required for the freezing step increases, the rotation speed of the indoor fan 11 increases. With this configuration, the control unit 20 can change the rotation speed of the indoor fan 11 for each indoor heat exchanger 10 at the step of freezing the indoor heat exchanger 10, thereby reducing a difference in the time required for the freezing step among the multiple indoor units Ui.

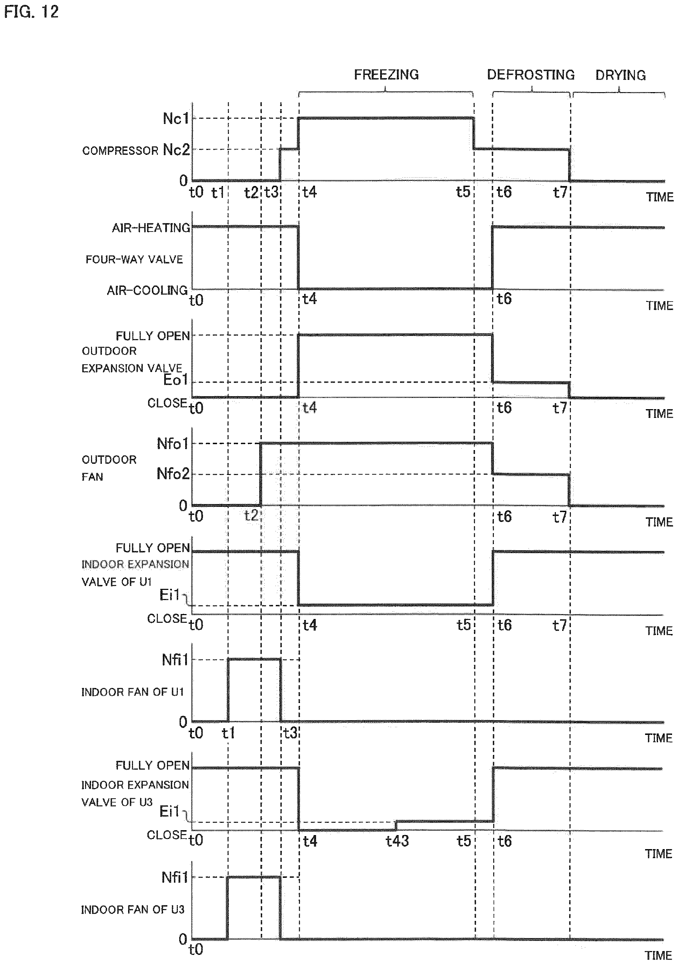

Fig. 12 is a time chart showing main equipment states of the outdoor unit Uo and the indoor units Ui. Figs. 2 and 4 will be referred as necessary. Note that in Fig. 12, the equipment states of the indoor units U1, U3 of the indoor units U1, U2-1, U2-2, U3, U4 targeted for the washing processing are shown, and the states of the remaining indoor units U2-1, U2-2, U4 are not shown.

In an example of Fig. 12, the air-conditioning operation is stopped at a time point t0, and a valve body (not shown) of the four-way valve 5 is at a position corresponding to the air-heating cycle. As a preliminary preparation for freezing of the indoor heat exchanger 10, the control unit 20 drives, between time points t1 to t3, the indoor fan 11 of the indoor unit U1 at a predetermined rotation speed Nfi1, and at the time point t2, drives the outdoor fan 3 at a predetermined rotation speed Nfo1. In this manner, the indoor/outdoor temperature is detected. Then, the control unit 20 drives, between the time points t3 to t4, the compressor 1 at a relatively-low rotation speed Nc2 while driving the outdoor fan 3.

After such processing has been performed, the control unit 20 performs, between the time points t4 to t5, the processing of freezing the indoor heat exchanger 10 of the indoor unit U1. That is, the control unit 20 switches the four-way valve 5 from the air-heating cycle to the air-cooling cycle at the time point t4 to throttle the indoor expansion valve 12 of the indoor unit U1 to a predetermined degree Ei1 of opening. Meanwhile, the control unit 20 brings the indoor expansion valve 12 of the indoor unit U3 into a closed state, and drives the compressor 1 at a predetermined rotation speed Nc1.

Note that the control unit 20 throttles the valve to the above-described predetermined degree Ei1 of opening, and therefore, the indoor heat exchanger 10 of the indoor unit Ui functions as the evaporator. As a result, low-temperature low-pressure refrigerant flows in such an indoor heat exchanger 10, thereby freezing the indoor heat exchanger 10. For example, the control unit 20 continues, for predetermined time, a state in which the detection value of the indoor heat exchanger temperature sensor 14 (see Fig. 4) is below zero. On the other hand, for the indoor unit U3 of which time required for the freezing step is short, the freezing step is delayed such that the end of the freezing step for the indoor unit U3 is coincident with that for the indoor unit U1 requiring a long freezing step. At a time point t43, the indoor expansion valve 12 of the indoor unit U3 is changed to the predetermined degree Ei1 of opening. Note that in the indoor unit U3 for which the freezing processing is not performed at the time point t4, the indoor expansion valve 12 is in the closed state between the time points t4 to t43 as described above, and therefore, almost no refrigerant flows into the indoor heat exchanger 10.

During freezing (the time points t4 to t5) of the indoor heat exchanger 10 of the indoor unit U1, the control unit 20 drives the outdoor fan 3 with the predetermined rotation speed Nfo1, and brings each of the indoor fans 11 of the indoor units U1, U3 into the stop state. As a result, external air is sent to the outdoor heat exchanger 2 functioning as the condenser. Meanwhile, due to a natural convection, air flows in the vicinity of the indoor heat exchanger 10 of the indoor unit U1. Accordingly, cooling of the air-conditioning room can be reduced. Note that in the indoor units U1, U3, the control unit 20 may drive the indoor fans 11 at a low speed during freezing of the indoor heat exchangers 10. Alternatively, the control unit 20 brings the outdoor expansion valve 4 into an open state (a fully-open state in an example of Fig. 4) during freezing (the time points t4 to t5).

After the indoor heat exchangers 10 of the indoor units U1, U3 have been frozen, the control unit 20 drives, between the times points t5 to t6, the compressor 1 at the relatively-low rotation speed Nc2 as the preliminary preparation for freezing of the indoor heat exchangers 10. Accordingly, a pressure difference between a high pressure side and a low pressure side of the four-way valve 5 is adjusted as necessary. Note that the control unit 20 decelerates the compressor 1 as the preliminary preparation for freezing as shown in Fig. 12 in a case where the pressure difference between the high pressure side and the low pressure side of the four-way valve 5 is relatively great, and accelerates the compressor 1 in a case where the pressure difference is too small. Moreover, the degrees of opening of the indoor expansion valves 12 of the indoor units U1, U3 are maintained at the predetermined degree Ei1 of opening upon freezing.

When freezing of the indoor heat exchangers 10 of the indoor units U1, U3 is performed, the control unit 20 switches the four-way valve 5 from the air-cooling cycle to the air-heating cycle. As described above, the pressure difference between the high pressure side and the low pressure side of the four-way valve 5 is adjusted as necessary, and therefore, the four-way valve 5 can be switched while drive of the compressor 1 is continued.

During defrosting (the time points t6 to t7) of the indoor heat exchangers 10 of the indoor units U1, U3, the control unit 20 throttles the outdoor expansion valve 4 to a predetermined degree Eo1 of opening while opening each of the indoor expansion valves 12 of the indoor units U1, U3 (fully opening the valves in the example of Fig. 12).

During defrosting as described above, the control unit 20 drives the outdoor fan 3 at a predetermined rotation speed Nfo2 while maintaining each of the indoor fans 11 of the indoor units U1, U3 in the stop state. This can suppress cold air accompanied by defrosting of the indoor heat exchanger 10 from flowing into the air-conditioning room from the indoor unit U1. Note that during defrosting of the indoor heat exchangers 10 of the indoor units U1, U3, the control unit 20 may drive the indoor fans 11 at a low speed.

After defrosting of the indoor heat exchangers 10 of the indoor units U1, U3, the control unit 20 dries the indoor heat exchangers 10 for predetermined time from the time point t7. In the example of Fig. 12, the control unit 20 stops driving each type of equipment including the indoor fans 11 of the indoor units U1, U3. In such processing, the control unit 20 may inhibit the air-conditioning operation based on operation of the remote controller 15 for predetermined time after the end (the time point t7) of defrosting of the indoor heat exchanger. This can prevent cold air from flowing into the air-conditioning room from the indoor units U1, U3, and can dry the indoor heat exchangers 10 by a natural convection.

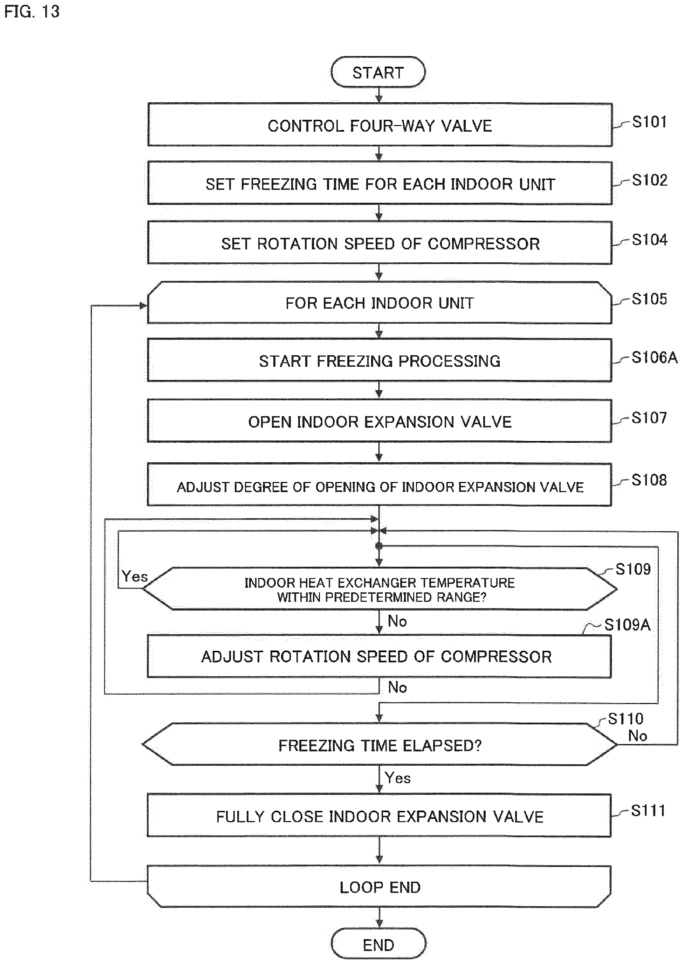

Fig. 13 is a flowchart showing another type of processing for freezing the indoor heat exchanger 10. Differences from the processing of Fig. 7 are that the step S103 is omitted and the step S106 is changed to a step S106A. Description of the other steps will be omitted.

The processing shown in Fig. 13 starts the freezing processing for the indoor units all together, and ends the freezing processing after a lapse of the freezing time for each indoor unit Ui. That is, the control unit 20 executes, for each indoor unit Ui, the steps S105 to S111 of Fig. 13. At the step S106A of Fig. 11, the control unit 20 starts the freezing processing for each indoor unit Ui, and proceeds to the step S107.

After the steps S107 to S110, in a case where the freezing time has elapsed (the step S110, Yes), the control unit 20 fully closes the indoor expansion valve 12 (the step Sill), and ends a series of processing for freezing the indoor heat exchanger 10 (END).

### <Time Chart C2>

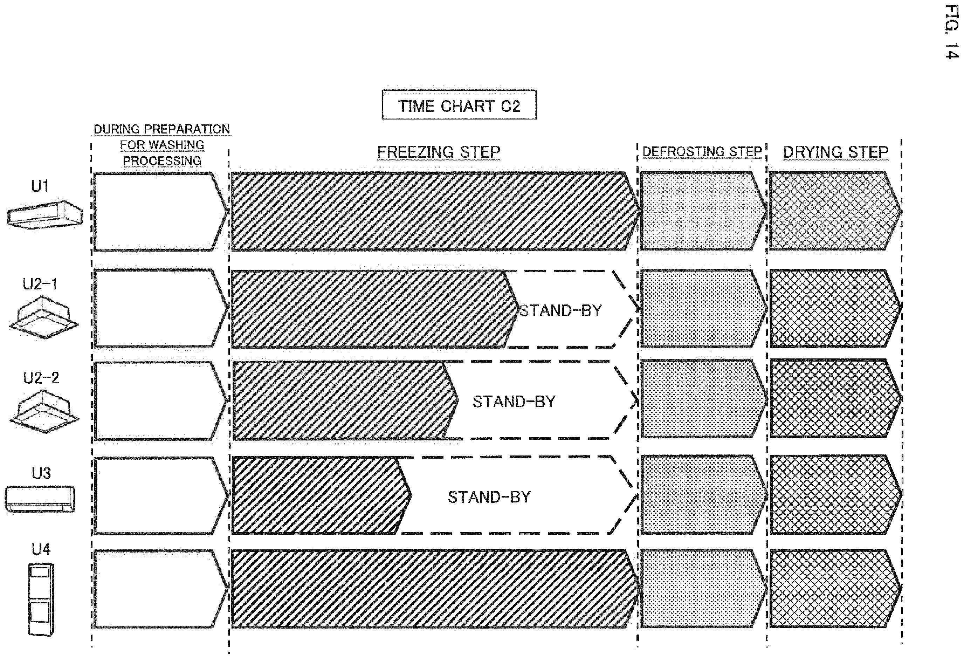

Fig. 14 is a time chart C2 showing the washing processing for the multiple indoor units Ui. Figs. 6 and 13 will be referred as necessary. The configuration of the indoor unit Ui is similar to that of Fig. 11. The control unit 20 starts the freezing step for the indoor units Ui different from each other in the time required for the freezing step all together, and the indoor units (e.g., the indoor units U2-1, U2-2, U3) of which time required for the freezing step is short wait, after the end of freezing of the indoor heat exchangers 10, without transitioning to the step of defrosting the indoor heat exchangers 10 until freezing of the indoor heat exchangers 10 ends for the indoor units (e.g., the indoor units U1, U4) of which time required for the freezing step is long. Note that the indoor units U2-1, U2-2 are different from each other in the time required for the freezing step because of the difference in the capacity of the indoor heat exchanger 10 or the difference in the relative humidity of indoor air.

According to an example shown in Fig. 14, the freezing step can be properly performed for each indoor unit Ui according to the machine type and the capacity or the indoor environment, and the washing processing can be performed for the indoor units Ui in the single system all together.

### <Time Chart C3>

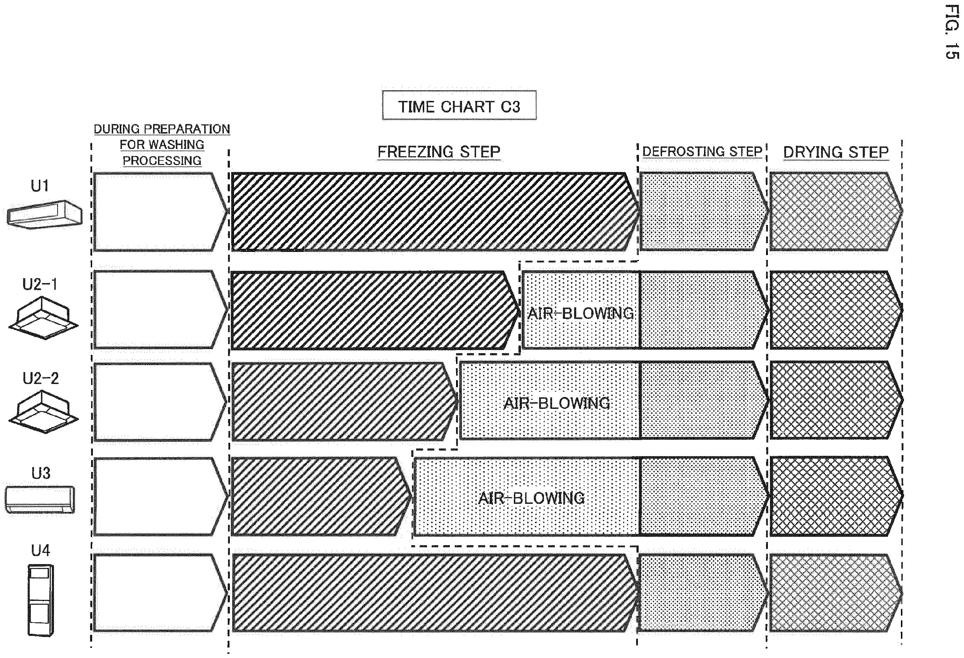

Fig. 15 is a time chart C3 showing the washing processing for the multiple indoor units Ui. Fig. 15 is a variation of the time chart C2 of Fig. 14. Figs. 6 and 7 will be referred as necessary. The configuration of the indoor unit Ui is similar to that of Fig. 11. The control unit 20 executes defrosting of the indoor heat exchanger 10 by air sent from the indoor fan 11 in the order starting from the indoor unit for which freezing of the indoor heat exchanger 10 has been performed for the time required for the freezing step, and for the other indoor units, keeps freezing the indoor heat exchangers 10. After the freezing step has ended for all units, the control unit 20 performs the air-heating cycle or brings the outdoor expansion valve 4 and the indoor expansion valves 12 into the open states, thereby performing the defrosting step.

According to an example shown in Fig. 15, the freezing step can be properly performed for each indoor unit Ui according to the machine type and the capacity or the indoor environment, and the washing processing can be performed for the indoor units Ui in the single system all together. Moreover, defrosting of the indoor heat exchanger 10 by the indoor fan 11 is executed for the indoor unit for which the freezing step has been performed for the required time, and therefore, defrosting processing can progress sooner.

### <Time Chart C4>

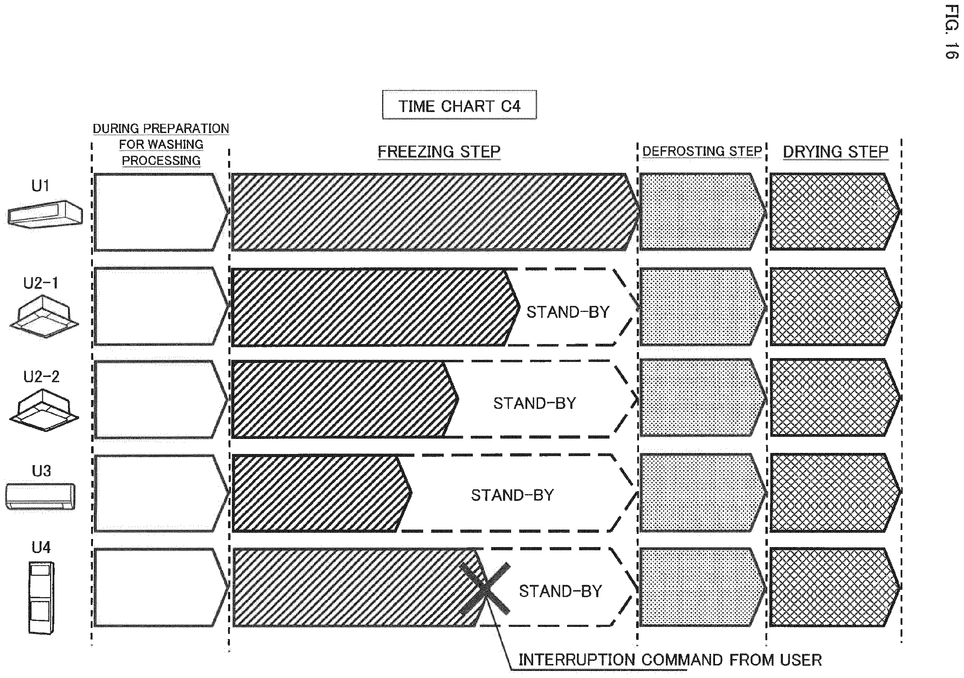

Fig. 16 is a time chart C4 showing the washing processing for the multiple indoor units Ui. Fig. 16 is a variation of the time chart C2 of Fig. 14. Figs. 6 and 7 will be referred as necessary. The configuration of the indoor unit Ui is similar to that of Fig. 11. In a case where a washing operation interruption command is provided during the freezing step, the control unit 20 interrupts the freezing step for the indoor unit (e.g., the indoor unit U4) to which the interruption command has been provided, and such an indoor unit waits until the defrosting step.

According to an example shown in Fig. 16, the freezing step can be properly performed for each indoor unit Ui according to the machine type and the capacity or the indoor environment, and the washing processing can be performed for the indoor units Ui in the single system all together. Moreover, in a case where the user has provided the interruption command (e.g., an interruption command from the remote controller 15 or the central control equipment 16), the freezing step for the corresponding indoor unit can be interrupted, and the processing can be implemented with a priority to a user's demand.

### <Time Chart C5>

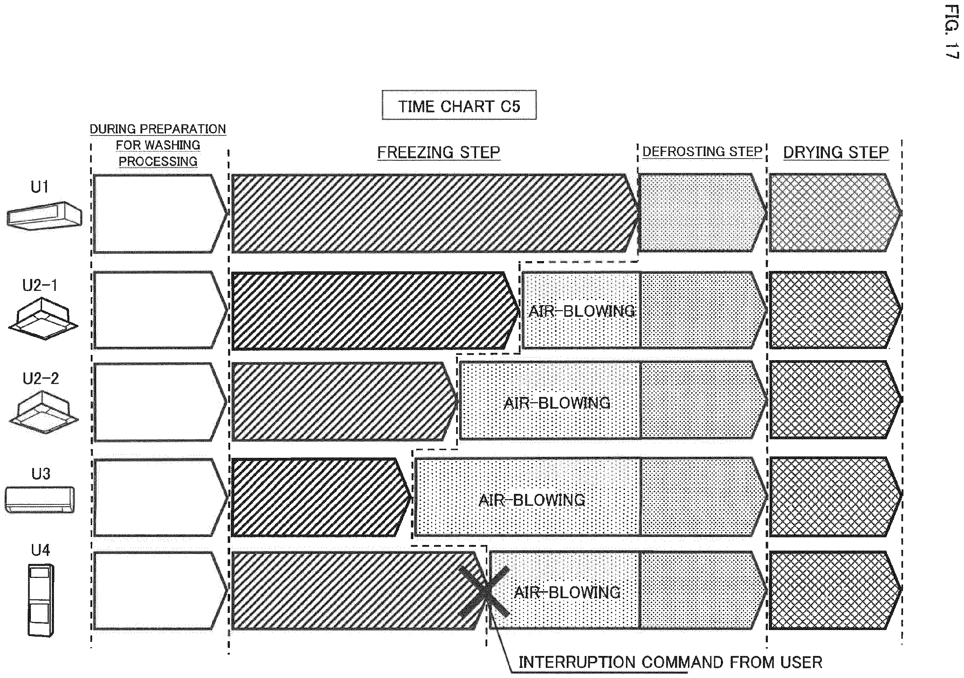

Fig. 17 is a time chart C5 showing the washing processing for the multiple indoor units Ui. Fig. 17 is a variation of the time chart C2 of Fig. 14. Figs. 6 and 7 will be referred as necessary. The configuration of the indoor unit Ui is similar to that of Fig. 11. In a case where the washing operation interruption command is provided during the freezing step, the control unit 20 interrupts the freezing step for the indoor unit (e.g., the indoor unit U4) to which the interruption command has been provided, and such an indoor unit transitions to defrosting of the indoor heat exchanger 10 by air sent from the indoor fan 11. Note that the indoor units (e.g., the indoor units U2-1, U2-2, U3) for which the freezing step has ended also transition to defrosting of the indoor heat exchangers 10 by air sent from the indoor fans 11.

According to an example shown in Fig. 17, the freezing step can be properly performed for each indoor unit Ui according to the machine type and the capacity or the indoor environment, and the washing processing can be performed for the indoor units Ui in the single system all together. Moreover, in a case where the user has provided the interruption command (e.g., the interruption command from the remote controller 15 or the central control equipment 16), the freezing step for the corresponding indoor unit can be interrupted, and defrosting by the indoor fan 11 can be promoted.

### <Time Chart C6>

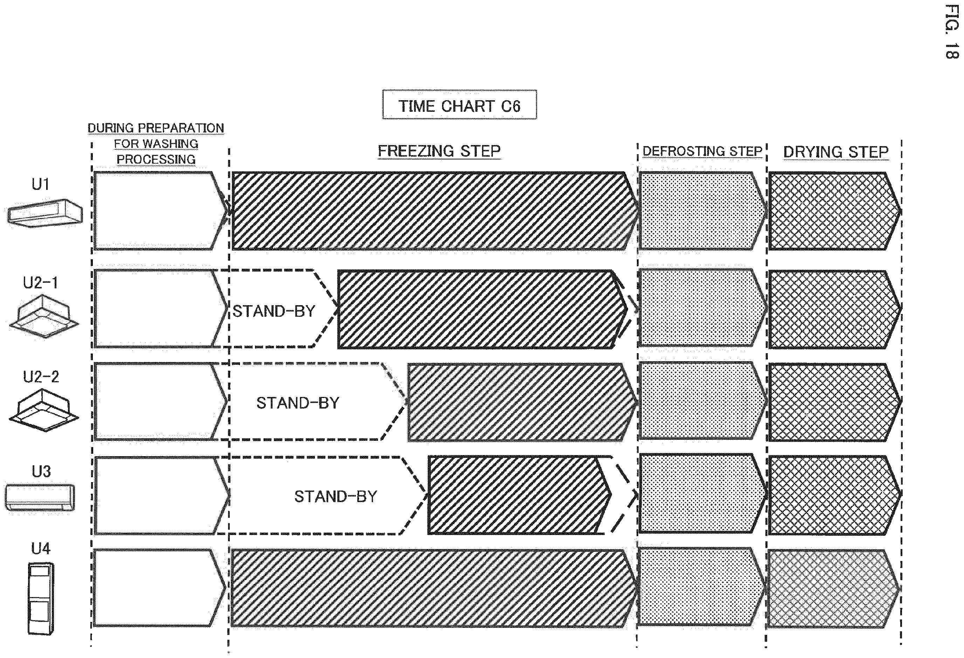

Fig. 18 is another time chart C6 showing the washing processing for the multiple indoor units Ui. Fig. 18 is a variation of the time chart C1 of Fig. 11. Figs. 6 and 7 will be referred as necessary. The configuration of the indoor unit Ui is similar to that of Fig. 11. Even when freezing for the indoor unit U2-1 and the indoor unit U3 ends relatively quickly, the control unit 20 starts the step of defrosting the indoor heat exchangers for the multiple indoor units Ui all together.

According to an example shown in Fig. 18, the freezing step can be properly performed for each indoor unit Ui according to the machine type and the capacity or the indoor environment, and the washing processing can be performed for the indoor units Ui in the single system all together. Moreover, even in a case where there is a difference in freezing end time among the indoor units due to some kind of reason, the indoor units Ui in the single system can transition to the defrosting processing all together.

According to the present embodiment, in the air-conditioner having the multiple indoor units different from each other in the machine type or the capacity and the outdoor unit, the indoor heat exchangers of the multiple indoor units can be properly held in the clean state.

### <<Second Embodiment>>

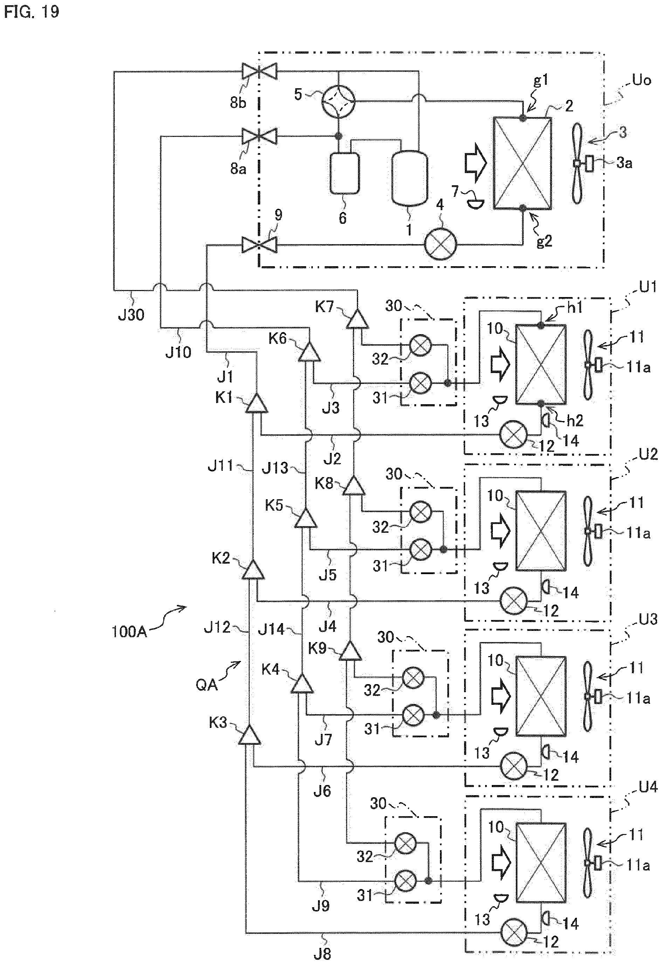

Fig. 19 is a diagram showing a refrigeration cycle configuration of an air-conditioner 100A according to a second embodiment. In the air-conditioner 100A, a control unit 20 executes, in a refrigeration cycle in which air-cooling and air-heating can be executed at the same time, defrosting of an indoor heat exchanger 10 in the order starting from an indoor unit for which freezing of the indoor heat exchanger 10 has been performed for time required for a freezing step.

In Fig. 19, differences from the refrigeration cycle configuration of Fig. 2 will be described. The same reference numerals are used to represent the same components. At an outdoor unit Uo, gate valves 8a, 8b are provided instead of the gate valve 8. One side of the gate valve 8a is connected to a low-pressure gas-side pipe J10, and the other side is connected to a suction side of an accumulator 6. One side of the gate valve 8b is connected to a high-pressure second gas-side pipe J30, and the other side is connected to a four-way valve 5.

Gas-side connection portions K7, K8, K9 and switching units 30 are provided on the path of the second gas-side pipe J30. The switching unit 30 has a valve 31 causing the indoor heat exchanger 10 to function as an evaporator and a valve 32 causing the indoor heat exchanger 10 to function as a condenser.

### <Operation of Air-Conditioner>

Hereinafter, three modes regarding air-conditioning operation of the air-conditioner 100A will be described. Indoor units U1, U2 will be described herein as an example. The same also applies to indoor units U3, U4.

### (First Mode)

A first mode is a mode for performing air-cooling operation by one (the other one is stopped) or both of the indoor units U1, U2 shown in Fig. 19. Hereinafter, a case where the air-cooling operation is performed using both of the indoor units U1, U2 will be described. In the first mode, the control unit 20 switches the four-way valve 5 such that an outdoor heat exchanger 2 functions as a condenser (solid lines in the four-way valve 5 shown in Fig. 19). Moreover, the control unit 20 opens the valve 31 and closes the valve 32 such that refrigerant evaporated in the indoor heat exchangers 10 of the indoor units U1, U2 is guided to a suction side of a compressor 1. Refrigerant from the second gas-side pipe J30 is stopped by the valve 32.

### (Second Mode)

A second mode is a mode for performing air-heating operation by one (the other is stopped) or both of the indoor units U1, U2 shown in Fig. 19. That is, the second mode is a mode for causing the outdoor heat exchanger 2 to function as an evaporator. For example, a case where the air-heating operation is performed using both of the indoor units U1, U2 will be described. The control unit 20 switches the four-way valve 5 such that the outdoor heat exchanger 2 functions as the evaporator (dashed lines in the four-way valve 5 shown in Fig. 19). Moreover, the control unit 20 opens the valve 32 and closes the valve 31 such that high-pressure gas refrigerant discharged from the compressor 1 is guided to the indoor heat exchangers 10 of the indoor units U1, U2.

### (Third Mode)

A third mode is a mode for performing the air-cooling operation and the air-heating operation at the same time. That is, the third mode is a mode in which the indoor units in the air-cooling operation and the air-heating operation are mixed and the outdoor heat exchanger 2 functions as the condenser. For example, the air-cooling operation is performed by one indoor unit U1, and the air-heating operation is performed by the indoor unit U2.

In the third mode, the control unit 20 switches the four-way valve 5 such that the outdoor heat exchanger 2 functions as the condenser (the solid lines in the four-way valve 5 shown in Fig. 19). Moreover, the control unit 20 opens the valve 31 and closes the valve 32 such that refrigerant evaporated in the indoor heat exchanger 10 of the indoor unit U1 is guided to the suction side of the compressor 1. Meanwhile, the control unit 20 opens the valve 32 and closes the valve 31 such that high-pressure gas refrigerant discharged from the compressor 1 is guided to the indoor heat exchanger 10 of the indoor unit U2.

High-temperature high-pressure gas refrigerant compressed in the compressor 1 is guided to the indoor unit U2 through the second gas-side pipe J30. Then, such gas refrigerant is condensed by exchanging heat with indoor air in the indoor heat exchanger 10 of the indoor unit U2, and the condensed refrigerant flows toward a liquid-side connection portion K1 through a liquid-side connection portion K2.

High-temperature high-pressure refrigerant guided to the outdoor heat exchanger 2 through the four-way valve 5 is condensed by releasing heat to outdoor air in the outdoor heat exchanger 2, and the condensed refrigerant is depressurized into gas-liquid two-phase refrigerant by the outdoor expansion valve 4.

Then, liquid refrigerant flowing toward the liquid-side connection portion K1 through a liquid-side pipe J1 and liquid refrigerant flowing toward the liquid-side connection portion K1 through a liquid-side pipe J11 are joined together at the liquid-side connection portion K1, and the joined liquid refrigerant flows toward an indoor expansion valve 12 through a liquid-side pipe J2. Such a refrigerant flow is unique to the third mode. Refrigerant depressurized by the indoor expansion valve 12 is evaporated by absorbing heat from indoor air in the indoor heat exchanger 10, and the evaporated refrigerant flows toward the suction side of the compressor 1 through the gas-side pipe J10. Using the third mode described above, a defrosting step by the air-heating operation is performed after a freezing step.

### <Time Chart C7>

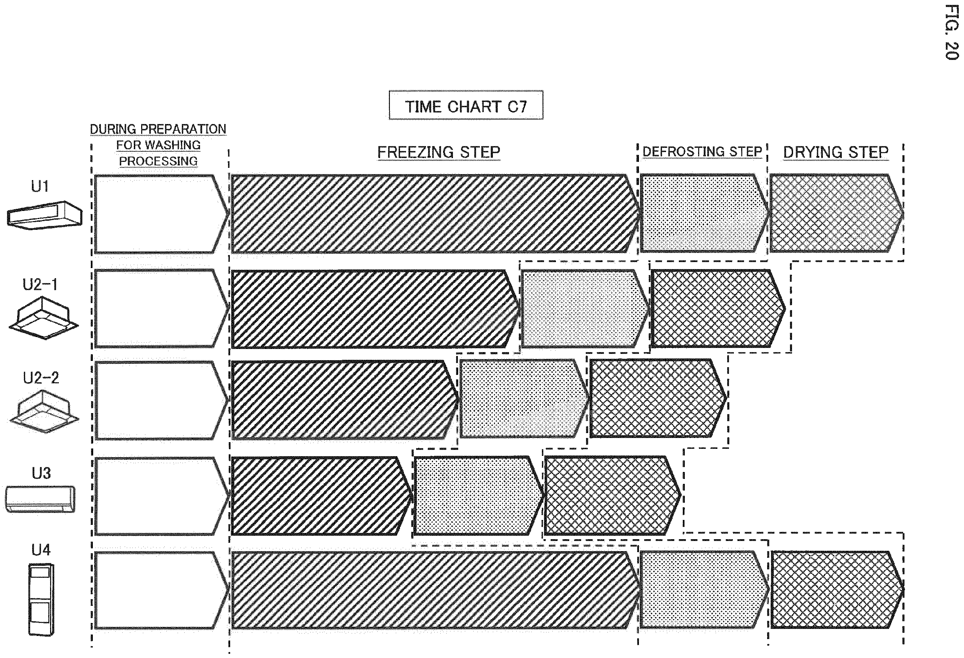

Fig. 20 is a time chart C7 showing washing processing for the multiple indoor units Ui. Figs. 6 and 7 will be referred as necessary. The configuration of the indoor unit Ui is similar to that of Fig. 11. The control unit 20 executes defrosting of the indoor heat exchanger 10 by the air-heating operation in the order starting from the indoor unit for which freezing of the indoor heat exchanger 10 has been performed for the time required for the freezing step, and for the other indoor units, keeps freezing the indoor heat exchangers 10 (the above-described third mode). A drying step is executed in the order starting from the indoor unit for which the defrosting step has ended.

According to an example shown in Fig. 20, the freezing step can be properly performed for each indoor unit Ui according to a machine type and a capacity or indoor environment, and the washing processing can be performed for the indoor units Ui in a single system all together. Moreover, defrosting of the indoor heat exchanger 10 by the air-heating operation is executed for the indoor unit for which the freezing step has been performed for the required time, and therefore, defrosting processing can progress sooner.

### <Time Chart C8>

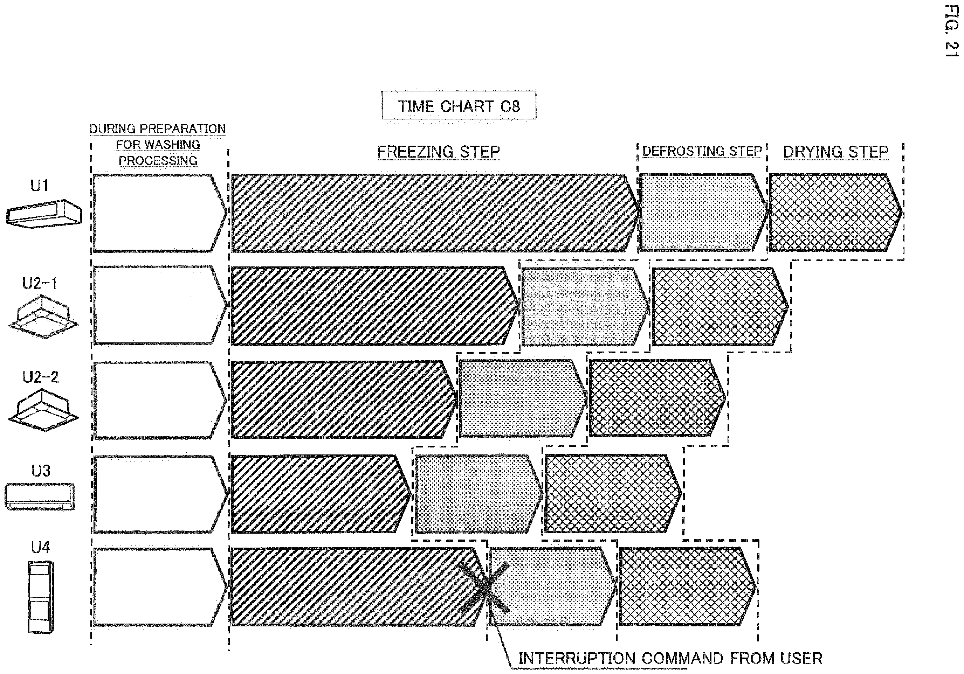

Fig. 21 is a time chart C8 showing the washing processing for the multiple indoor units Ui. Fig. 21 is a variation of the time chart C7 of Fig. 20. Figs. 6 and 7 will be referred as necessary. The configuration of the indoor unit Ui is similar to that of Fig. 11. In a case where a washing operation interruption command is provided during the freezing step, the control unit 20 interrupts the freezing step for the indoor unit (e.g., the indoor unit U4) to which the interruption command has been provided, and such an indoor unit transitions to defrosting of the indoor heat exchanger 10 by the air-heating operation. Note that the indoor units (e.g., the indoor units U2-1, U2-2, U3) for which the freezing step has ended also transition to defrosting of the indoor heat exchangers 10 by the air-heating operation.

According to an example shown in Fig. 21, the freezing step can be properly performed for each indoor unit Ui according to the machine type and the capacity or the indoor environment, and the washing processing can be performed for the indoor units Ui in the single system all together. Moreover, in a case where a user has provided the interruption command (e.g., an interruption command from a remote controller 15 or central control equipment 16), the freezing step for the corresponding indoor unit can be interrupted, and defrosting by the air-heating operation can be promoted.

In the single-system air-conditioner having the multiple indoor units Ui different from each other in the machine type or the capacity of the indoor heat exchanger 10 and the outdoor unit Uo, a control device (e.g., the control unit 20) of the air-conditioner 100 of the present embodiment can perform operation such that time periods for performing the freezing step for the multiple indoor units Ui at least partially overlap with each other when the freezing step for the indoor heat exchangers 10 of the multiple indoor units is performed.

The air-conditioner 100 may have multiple indoor units different from each other in freezing time as the duration of the step of freezing the indoor heat exchanger 10, and the control device may control the time periods for performing the freezing step to partially overlap with each other according to the freezing time.

According to the air-conditioner 100 of the present embodiment, the freezing time is changed according to a predetermined condition for maintaining a freezing amount constant. However, in the refrigeration cycle in which the multiple indoor units Ui are connected to each other, the freezing time for the indoor unit varies according to differences in an indoor air temperature condition, a humidity condition, and the structure of the indoor unit Ui. In the present embodiment, the freezing step is performed according to such freezing time. The control of adjusting the freezing time is also conceivable. Thus, (1) for the indoor unit of which freezing time is short, the freezing step may be extended according to the indoor unit of which freezing time is long, or (2) for the indoor unit of which freezing time is long, the freezing step may be shortened according to the indoor unit of which freezing time is short. In the former case (1), there is a concern on dew condensation on a surface of the indoor unit of which freezing time is short. In the latter case (2), there is a concern on degradation of a washing effect due to a lack of the amount of freezing for the indoor unit of which freezing time is long. However, these concerns on dew condensation and the lack of the freezing amount are minimized so that the freezing time set according to the maximum time or the minimum time can be applied. That is, the control device may perform freezing operation according to the indoor unit of which freezing time is shortest, or may perform the freezing operation according to the indoor unit of which freezing time is longest. Thus, the freezing processing can be started and ended for the indoor units Ui all together.

Each embodiment has described the details for simply describing the present invention, and is not limited to one including all configurations described above. Addition/omission/replacement of other configurations may be made to some of the configurations of each embodiment. The mechanisms and configurations necessary for description have been described above, and all mechanisms and configurations for a product are not necessarily described.

### LIST OF REFERENCE SIGNS

- 1: Compressor
- 2: Outdoor Heat Exchanger (Condenser/Evaporator)
- 3: Outdoor Fan
- 4: Outdoor Expansion Valve
- 5: Four-Way Valve
- 10: Indoor Heat Exchanger (Evaporator/Condenser)
- 11: Indoor Fan
- 12: Indoor Expansion Valve
- 13: Indoor Temperature Sensor
- 14: Indoor Heat Exchanger Temperature Sensor
- 15: Remote Controller
- 16: Central Control Equipment
- 17: Outdoor Control Circuit
- 18: Indoor Control Circuit
- 20: Control Unit (Control Device)
- 30: Switching Unit
- 31,32: Valve
- 100, 100A: Air-Conditioner
- J1: Pipe (Liquid-Side Pipe)
- J10: Pipe (Gas-Side Pipe)
- J30: Second Pipe (Second Gas-Side Pipe)
- K1, K2, K3: Liquid-Side Connection Portion
- K4, K5, K6: Gas-Side Connection Portion
- K7, K8, K9: Gas-Side Connection Portion
- Q, QA: Refrigerant Circuit
- Ui: Indoor Unit
- Uo: Outdoor Unit

## Claims

1. A single-system air-conditioner comprising:
multiple indoor units different from each other in a machine type or an indoor heat exchanger capacity; and
an outdoor unit,
wherein a control device of the air-conditioner performs operation such that when a step of freezing indoor heat exchangers of the multiple indoor units is performed, time periods for performing the freezing step for the multiple indoor units at least partially overlap with each other.

2. The air-conditioner according to claim 1, wherein
the air-conditioner comprises the multiple indoor units different from each other in freezing time as duration of the freezing step, and
the control device causes the time periods for performing the freezing step to at least partially overlap with each other according to the freezing time.

3. The air-conditioner according to claim 1, wherein
the control device performs freezing operation according to an indoor unit of which time required for the freezing step is shortest.

4. The air-conditioner according to claim 1, wherein
the control device performs freezing operation according to an indoor unit of which time required for the freezing step is longest.

5. The air-conditioner according to claim 1, wherein
the air-conditioner has the multiple indoor units different from each other in time required for the freezing step, and
the control device executes freezing of the indoor heat exchangers for the indoor units in descending order of the time required for the freezing step, and for an indoor unit of which time required for the freezing step is short, starts the freezing step at delayed timing such that an end of the freezing step for the indoor unit of which time required for the freezing step is short is coincident with that for an indoor unit of which time required for the freezing step is long.

6. The air-conditioner according to claim 1, wherein
the air-conditioner has the multiple indoor units different from each other in time required for the freezing step, and
the control device starts the freezing step for the indoor units different from each other in the time required for the freezing step all together, and an indoor unit of which time required for the freezing step is short waits, after an end of freezing of the indoor heat exchanger thereof, without transitioning to a step of defrosting the indoor heat exchanger until freezing of an indoor heat exchanger for an indoor unit of which time required for the freezing step is long ends.

7. The air-conditioner according to claim 5 or 6, wherein
the control device increases, at the step of freezing the indoor heat exchangers, a rotation speed of an indoor fan as the time required for the freezing step for the multiple indoor units increases.

8. The air-conditioner according to claim 6, wherein
in a refrigeration cycle in which air-cooling and air-heating are executable in a mixed manner in the multiple indoor units, the control device of the air-conditioner executes defrosting of the indoor heat exchangers by an air-heating cycle in an order starting from an indoor unit for which freezing of the indoor heat exchanger has been performed for the time required for the freezing step.

9. The air-conditioner according to claim 6, wherein
the control device executes defrosting of the indoor heat exchangers by air sent from an indoor fan in an order starting from an indoor unit for which freezing of the indoor heat exchanger has been performed for the time required for the freezing step.

10. The air-conditioner according to claim 6, wherein
in a case where a washing operation interruption command is provided during the freezing step, the control device stops the freezing step for an indoor unit to which the interruption command has been provided, and the indoor unit to which the interruption command has been provided waits until a start of the defrosting step.

11. The air-conditioner according to claim 8, wherein
in a case where a washing operation interruption command is provided during the freezing step, the control device stops the freezing step for an indoor unit to which the interruption command has been provided, and the indoor unit to which the interruption command has been provided transitions to the defrosting step.

12. The air-conditioner according to claim 9, wherein
in a case where a washing operation interruption command is provided during the freezing step, the control device stops the freezing step for an indoor unit to which the interruption command has been provided, and the indoor unit to which the interruption command has been provided transitions to defrosting of the indoor heat exchanger by the air sent from the indoor fan.

13. The air-conditioner according to claim 5, wherein
the control device starts a step of defrosting the indoor heat exchangers for the multiple indoor units all together.

## Amended claims

### Amended claims under Art. 19.1 PCT

1. A single-system air-conditioner (100, 100A) comprising:
multiple indoor units (Ui) different from each other in a machine type or an indoor heat exchanger capacity; and
an outdoor unit (Uo), **characterized in that**
the air-conditioner (100, 100A) has the multiple indoor units (Ui) different from each other in freezing time as duration of a step of freezing indoor heat exchangers provided in the multiple indoor units (Ui), and
a control device (20) of the air-conditioner (100, 100A) performs operation such that when the freezing step is performed, time periods for performing the freezing step for the multiple indoor units (Ui) at least partially overlap with each other according to the freezing time.

2. The air-conditioner (100, 100A) according to claim 1, wherein
the control device (20) performs freezing operation according to an indoor unit (Ui) of which time required for the freezing step is shortest.

3. The air-conditioner (100, 100A) according to claim 1, wherein
the control device (20) performs freezing operation according to an indoor unit (Ui) of which time required for the freezing step is longest.

4. The air-conditioner (100, 100A) according to claim 1, wherein
the air-conditioner (100, 100A) has the multiple indoor units (Ui) different from each other in time required for the freezing step, and
the control device (20) executes freezing of the indoor heat exchangers for the indoor units (Ui) in descending order of the time required for the freezing step, and for an indoor unit (Ui) of which time required for the freezing step is short, starts the freezing step at delayed timing such that an end of the freezing step for the indoor unit (Ui) of which time required for the freezing step is short is coincident with that for an indoor unit (Ui) of which time required for the freezing step is long.

5. The air-conditioner (100, 100A) according to claim 1, wherein
the air-conditioner (100, 100A) has the multiple indoor units (Ui) different from each other in time required for the freezing step, and
the control device (20) starts the freezing step for the indoor units (Ui) different from each other in the time required for the freezing step all together, and an indoor unit (Ui) of which time required for the freezing step is short waits, after an end of freezing of the indoor heat exchanger thereof, without transitioning to a step of defrosting the indoor heat exchanger until freezing of an indoor heat exchanger for an indoor unit (Ui) of which time required for the freezing step is long ends.

6. The air-conditioner (100, 100A) according to claim 4 or 5, wherein
the control device (20) increases, at the step of freezing the indoor heat exchangers, a rotation speed of an indoor fan as the time required for the freezing step for the multiple indoor units (Ui) increases.

7. The air-conditioner (100, 100A) according to claim 5, wherein
in a refrigeration cycle in which air-cooling and air-heating are executable in a mixed manner in the multiple indoor units (Ui), the control device (20) of the air-conditioner (100, 100A) executes defrosting of the indoor heat exchangers by an air-heating cycle in an order starting from an indoor unit (Ui) for which freezing of the indoor heat exchanger has been performed for the time required for the freezing step.

8. The air-conditioner (100, 100A) according to claim 5, wherein
the control device (20) executes defrosting of the indoor heat exchangers by air sent from an indoor fan in an order starting from an indoor unit (Ui) for which freezing of the indoor heat exchanger has been performed for the time required for the freezing step.

9. The air-conditioner (100, 100A) according to claim 5, wherein
in a case where a washing operation interruption command is provided during the freezing step, the control device (20) stops the freezing step for an indoor unit (Ui) to which the interruption command has been provided, and the indoor unit (Ui) to which the interruption command has been provided waits until a start of the defrosting step.

10. The air-conditioner (100, 100A) according to claim 7, wherein
in a case where a washing operation interruption command is provided during the freezing step, the control device (20) stops the freezing step for an indoor unit (Ui) to which the interruption command has been provided, and the indoor unit (Ui) to which the interruption command has been provided transitions to the defrosting step.

11. The air-conditioner (100, 100A) according to claim 8, wherein
in a case where a washing operation interruption command is provided during the freezing step, the control device (20) stops the freezing step for an indoor unit (Ui) to which the interruption command has been provided, and the indoor unit (Ui) to which the interruption command has been provided transitions to defrosting of the indoor heat exchanger by the air sent from the indoor fan.

12. The air-conditioner (100, 100A) according to claim 4, wherein
the control device (20) starts a step of defrosting the indoor heat exchangers for the multiple indoor units (Ui) all together.

Statement under Art. 19.1 PCT
Claim 1 is amended to "the air-conditioner has multiple indoor units different from each other in freezing time as duration of a step of freezing indoor heat exchangers provided in the multiple indoor units, and a control device of the air-conditioner performs operation such that when the freezing step is performed, time periods for performing the freezing step for the multiple indoor units at least partially overlap with each other according to the freezing time" in order to clarify an operation method. Such an amendment is based on claim 2 before amendment.

Claim 1 is **characterized in that** "the air-conditioner has multiple indoor units different from each other in freezing time as duration of a step of freezing indoor heat exchangers provided in the multiple indoor units, and a control device of the air-conditioner performs operation such that when the freezing step is performed, time periods for performing the freezing step for the multiple indoor units at least partially overlap with each other according to the freezing time." Thus, as described in paragraphs 0068 and 0084, there are such significant effects that the freezing step can be properly performed for each indoor unit Ui and the washing processing can be performed for the indoor units Ui in the single system all together.

On the other hand, Literatures 1 and 2 fail to describe such a characteristic of the invention of the present application.

Thus, those skilled in the art cannot easily arrive at claim 1 based on Literatures 1 and 2.

Claim 2 is cancelled.
